Europäisches Patentamt

European Patent Office

Office européen des brevets

(11) Veröffentlichungsnummer: 0 377 071
A1

## (12) EUROPÄISCHE PATENTANMELDUNG

(21) Anmeldenummer: 89102819.3

(22) Anmeldetag: 18.02.89

(51) Int. Cl.⁵: B65G 45/16

(30) Priorität: 23.12.88 DE 3843569

(43) Veröffentlichungstag der Anmeldung:
11.07.90 Patentblatt 90/28

(84) Benannte Vertragsstaaten:
AT BE CH DE ES FR GB GR IT LI LU NL SE

(71) Anmelder: Müller GmbH Herne
Schüchtermannstrasse 2-4
D-4690 Herne 1(DE)

Anmelder: TIP TOP Dr. NORDMAN GMBH &
CO.
Manderscheidtstrasse 14
D-4300 Essen(DE)

(72) Erfinder: Haake, Heinrich
Wilhelmstrasse 96
D-4620 Castrop-Rauxel(DE)

(74) Vertreter: Herrmann-Trentepohl, Werner,
Dipl.-Ing. et al
Schaeferstrasse 18
D-4690 Herne 1(DE)

(54) Förderbandkopfabstreifer.

(57) Bei einem Förderbandkopfabstreifer (1), dessen unter der Abwurftrommel (5) des Gurtbandes (4) angeordneter Abstreiferhalter (7) beiderseits mit je einer Schwinge (21) längs eines zur Trommelachse konzentrischen Kreisbogensegmentes beweglich ist und jede Schwinge (21) auf Federn und Schubkolbengetrieben abgestützt ist, die zum Abheben der Abstreiferzunge (7) von der Gurtoberfläche (44) dienen, ist erfindungsgemäß vorgesehen, daß die Schubkolben bei gesperrter Druckabsetzung im Kolbenflächenraum (30) der Arbeitszylinder (27) der Schubkolbengetriebe (28) als Federn dienen und mit den Kolbenstangen (26) die Schwingen (21) abstützen, welche exzentrisch und außerhalb von den den Kreisbogensegmenten folgenden Führungen (10) entgegen der Förderrichtung des Gurtes (4) gelagert sind.

Fig.1

Die Erfindung betrifft einen Förderbandkopfabstreifer gemäß dem Oberbegriff des Anspruches 1.

Der Kopf von Gummigurtförderern dient zur Rückführung des fördernden Obergurtes in das Untertrum des endlos umlaufenden Fördergurtes. Dazu wird eine in dem stationären Fördergerüst des Bandförderers gelagerte Abwurftrommel benutzt. Je nach Zusammensetzung des Fördergutes werden trotz der Zentripetalbeschleunigung der Gurtoberfläche auf der Abwurftrommel Anbackungen auf der Gurtoberseite nicht vom Fördergurt gelöst, sondern in das Untertrum mitgenommen, was zu wachsenden Verunreinigungen der Förderstrecke führt und zu Förderstörungen Anlaß gibt. Der erfindungsgemäße Förderbandkopfabstreifer entfernt solche Anbackungen bereits im Bereich der Abwurftrommel und am Beginn des Untertrums, so daß sich an dieser Stelle des stationären Fördergerüstes die gelösten Anbackungen ansammeln und ggf. durch einen Abriebförderer weggenommen werden können.

Der Abstreifer besteht in der Regel aus einer Federzunge, welche auch segmentiert sein kann und mit ihrer dünnen Kante unmittelbar auf die Bandoberfläche wirkt. Die Zunge besteht im Interesse einer Schonung der Gurtoberfläche durch Minimierung der reibenden Abtragungen zumeist aus gummielastischem Werkstoff. Infolgedessen unterliegt der Abstreifer je nach Belastung einem mehr oder weniger schnellen Verschleiß seiner Zungenkante.

Die im Betrieb auftretenden Abstreiferkräfte werden mit dem Abstreiferhalter angetragen, die sich zweckmäßig quer über die volle Breite des auf dem der Abwurftrommel flachliegenden Fördergurtes erstreckt. Erfindungsgemäß ist der Abstreiferhalter beweglich angeordnet, wobei er hauptsächlich einem exzentrischen zur Trommelachse verlaufenden Kreisbogensegment folgt. Infolge der so festgelegten Bewegungsrichtung kann sich der Abstreiferhalter einerseits entgegen der Laufrichtung des Gurtes so bewegen, daß er unter Annäherung an die Gurtoberfläche den wachsenden Verschleiß des Abstreifers ausgleicht. Andererseits läßt sich der Abstreiferhalter in der Laufrichtung bewegen und dabei so verstellen, daß die Abstreiferzunge von der Gurtoberfläche abhebt. Das geschieht im Rahmen der Erfindung zur Schonung der Abstreiferzunge beim Durchlauf von mechanischen Gurtnähten und vorzugsweise nach Maßgabe eines von der Gurtnaht ausgelösten Signals, welches die Abstreiferzunge kurzfristig von der Bandoberfläche abhebt.

Der beschriebene Ausgleich des Verschleißes der Abstreiferzunge erfolgt erfindungsgemäß selbstätig. Dazu dient die Kraft der Federn, an die der Abstreiferhalter angeschlossen ist. Diese Federn halten die Abstreiferzunge auf der Gurtoberfläche mit dem erforderlichen Andruck. Das Abziehen der Abstreiferzunge von der Gurtoberfläche erfolgt durch die der Federkraft entgegenwirkenden Drük-ke in den Arbeitszylindern der Schubkolbengetriebe, die auf den Abstreiferhalter wirken. Die Lagerung des Abstreiferhalters auf Schwingen gewährleistet die Führung der Abstreiferzunge längs des beschriebenen Kreisbogensegmentes.

Solche Förderbandkopfabstreifer sind bereits bekannt (deutsches Gebrauchsmuster G 87 14 352.6). Hierbei sind die Federn der Bauelemente von den pneumatischen Schubkolbengetrieben funktionell und konstruktiv getrennt. Während die Federn den Andruck des Abstreifers an die Gurt-oberfläche entsprechend der wechselnden Reib-werten ändern, dienen die Schubkolbengetriebe dazu, nach Maßgabe eines den Durchlauf einer Bandnaht feststellenden z. B. induktiven Messung über ein Ventil beide Arbeitszylinder zum Lösen des Abstreifers von der Gurtoberfläche zu beaufschlagen. Die Schwingen sind um Drehpunkte beweglich, welche in der Gurtumschlingung im Gerüst der Abwurftrommel auf der horizontalen Mittellinie durch die Achsmitte der Abwurftrommel liegen.

Der konstruktive Aufwand hierfür ist beträchtlich und in dem stationären Fördergerüst des Transportbandes schwer unterzubringen. Die be-wegten Massen eines solchen Förderbandkopfab-streifers sind erheblich und schwer zu beherrschen. Im Betrieb stellen sich Schwierigkeiten ein, sobald der Fördergurt rückwärts gefahren werden muß. Das kommt bei der Herstellung von Bandnähten regelmäßig und daher relativ häufig vor. Bei Rückwärtsfahrt wird der Abstreifer, der von den Federn auf dem Band gehalten wird mitgenommen und verklemmt sich auf dem Gurt, wodurch schwere Schäden entstehen können. Das Abbauen des Abstreifers für die Rückwärtsfahrt ist mit einem zu großen Aufwand verbunden.

Der Erfindung liegt die Aufgabe zugrunde, den baulichen und konstruktiven Aufwand für den Abstreifer zu senken und eine unproblematische Rückwärtsfahrt des Fördergurtes zu ermöglichen. Diese Aufgabe löst die Erfindung mit den Merkmalen des Anspruches 1. Weitere Merkmale der Erfindung sind Gegenstand der Unteransprüche.

Die bauliche Zusammenfassung der Federn und der Schubkolbengetriebe durch ein in jedem Arbeitszylinder vor dem Schubkolben aufgebautes pneumatisches Druckpolster ergibt Federn mit langem Hub und entsprechender Dämpfung, wodurch insbesondere die dynamischen Kräfte der bewegten Massen besser zu beherrschen sind. Diese Massen werden erfindungsgemäß dadurch stark vermindert, daß der Abstreiferhalter eine baulich von den Schwingen getrennte Führung erhält, die dem beschriebenen exzentrischen Kreisbogensegment folgt. Die Schwingen dienen gemäß der Erfindung dazu, dem Abstreifer einen weiteren Freiheitsgrad zu geben, welcher es dem Abstreifer ermöglicht, außerhalb der Kreisbogenführung entgegen der Laufrichtung des Fördergurtes einem engen Bogen zu folgen und damit die Rückwärtsfahrt zu ermöglichen. Bei dieser Bewegung wird bei Mitnahme des Abstreifers der Abstreiferhalter mit den Schwingen nach vorn umgeklappt und kann sich daher nicht mehr auf der Gurtoberfläche verklemmen.

Die Erfindung hat den Vorteil, daß alle Baugruppen des Förderbandkopfabstreifers außerhalb der Umschlingung des Fördergurtes etwa hängend unter dem Bandtraggerüst oder auf diesem abgestützt befestigt werden können. Es entsteht dadurch ein leicht montierbares Zusatzgerät, welches für die rechtzeitige Säuberung der Gurtoberflächen sorgt und leicht demontiert werden kann. Die bewegten Massen sind gering. Da das Gerät für Vorwärts-und für Rückwärtsfahrt gleichermaßen geeignet ist, benötigt das praktisch keine Beaufsichtigung.

Mit den Merkmalen des Anspruches 2 vereinfacht sich die pneumatische Steuerung der Schubkolbengetriebe erheblich. Hierbei geht man von einem vorgegebenen Netzdruck der Druckluft aus, der im Untertagebetrieb z. B. zwischen 3 und 4 bar liegen kann. Mit Hilfe eines einstellbaren Ventils wird ein unter diesem Netzdruck liegende Arbeitsdruck in den Kolbenflächenräumen der Arbeitszylinder eingestellt, in denen sich das Druckpolster befindet. Dieser Arbeitsdruck entspricht der erforderlichen Federkraft. Die Kolbenflächenringräume in den Arbeitszylindern lassen sich dagegen nach Maßgabe des vom Durchlauf einer Bandnaht ausgelösten Störsignals mit dem vollen Druck des Druckluftnetzes beaufschlagen. Das führt augen blicklich zu einer Schubkolbenbewegung in den Kolbenflächenraum und damit zum Abheben des Abstreifers von der Gurtoberfläche durch Bewegung des Abstreiferhalters in der kreisbogensegmentförmigen Führung. Komplizierte Druckluftschaltungen sind hierfür nicht erforderlich. Vielmehr genügt in der Regel ein 3/2-Wegeventil zwischen Netz und Arbeitszylindern, das im Falle einer induktiven Meßwerterfassung zweckmäßig elektromagnetisch gesteuert ist.

Die Konstruktion des neuen Förderbandkopfabstreifers läßt sich mit den Merkmalen des Anspruches 3 erheblich vereinfachen, weil die Justierung des Abstreifers gegenüber der Gurtoberfläche einerseits sehr genau und andererseits sehr einfach ist. Durch Verstecken der Querglieder in den Aussparungen der Seitenbleche läßt sich jeder beliebige Winkel der Führung zum Gurt einstellen und so die beschriebene Funktion des Abstreifers gewährleisten.

Der Anspruch 5 beschreibt eine Ausführungsform der Erfindung, welche eine verklemmungsfreie Führung des Abstreiferhalters während des Betriebes gewährleistet und dabei die von den Schwingen und den Lagern ausgehenden Kräfte auf dem beweglichen Teil der Kreisbogensegmentführung einwandfrei begrenzt. Hierbei haben gemäß Anspruch 5 die Lagerbleche außerdem den Vorteil, daß sie die Reaktionskräfte der pneumatischen Schubkolbengetriebe abtragen können und dadurch das Gerät unabhängig von der Lage entsprechender Widerlager im Bandtraggerüst machen.

Mit dem Anspruch 6 läßt sich eine Überlastung der Schubkolbengetriebe mit mechanischen Kräfte des Abstreiferhalters und der Schwingen verhindern. Diese könnten auftreten, wenn der Anschlag des Schubkolbens im Arbeitszylinder die Schubkolbenendstellung begrenzen würde. Erfindungsgemäß geschieht das jedoch durch das Ende der Kreisbogensegmentführung und die Abstützung des Abstreiferhalters auf der Abstreifertraverse.

Zum besseren Verständnis wird die Erfindung im folgenden anhand eines Ausführungsbeispieles näher erläutert, welches in den Figuren der Zeichnungen wiedergegeben ist; es zeigen

Fig. 1 in abgebrochener Darstellung des Förderbandes den Förderbandkopfabstreifer gemäß der Erfindung in Seitenansicht, wobei mehrerer Stellungen der Abstreiferzunge wiedergegeben sind,

Fig. 2 eine abgebrochene Stirnansicht des Gegenstandes der Fig. 1,

Fig. 3 eine der in Fig. 1 wiedergegebenen Stellungen der Abstreiferzunge in einer durch Fortlassung aller für das Verständnis nicht erforderlichen Einzelheiten vereinfachten Darstellung,

Fig. 4 die zweite der in Fig. 1 wiedergegebenen Stellungen der Abstreiferzunge in der Fig. 3 entsprechender Darstellung,

Fig. 5 in den Fig. 3 und 4 entsprechender Darstellung die von der Gurtoberfläche abgezogene Abstreiferzunge und

Fig. 6 in den Fig. 3 bis 5 entsprechender Darstellung die bei Rückwärtsfahrt des Gurtes abgehobene Abstreiferzunge.

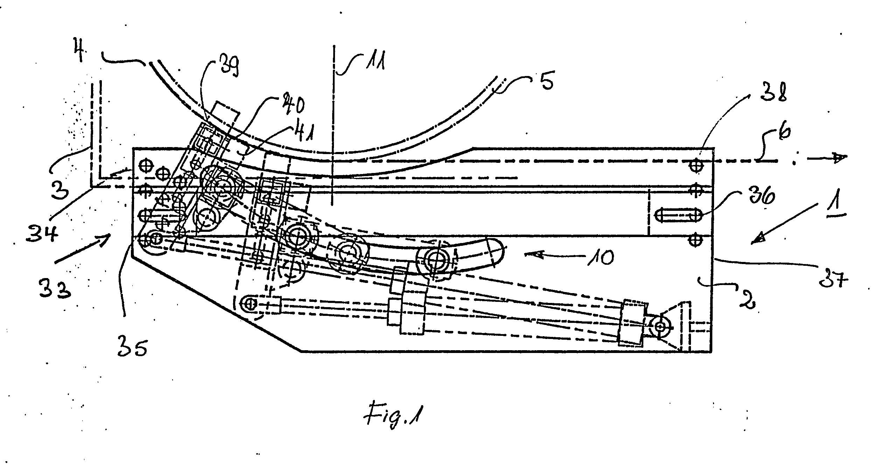

Die Bauweise des in den Figuren dargestellten und in Fig. 1 allgemein mit (1) bezeichneten Abstreifers ist spiegelsymmetrisch zur Bandmitte, so daß es im folgenden genügt, eine Hälfte des Förderbandkopfabstreifers (1) zu erläutern.

Mit je einem Lagerblech (2) ist der Förderbandkopfabstreifer (1) am stationären Teil (3) des Förderbandes befestigt. Der Fördergurt (4) wird mit einer Abwurftrommel (5) umgelenkt, so daß der Untergurt (6) in Richtung des eingetragenen Pfeils in das Untertrum einläuft.

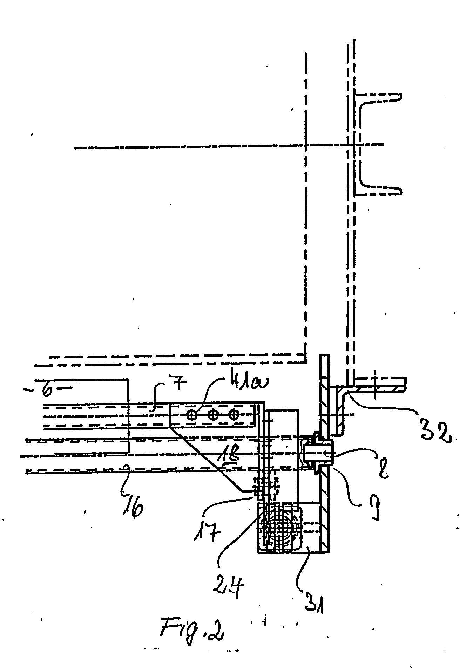

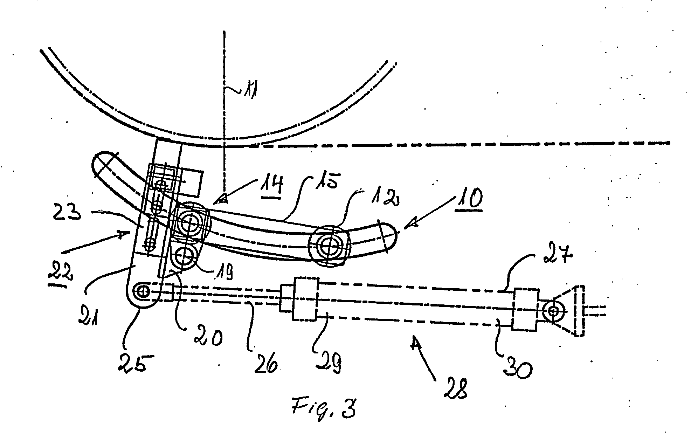

Gemäß der Darstellung der Fig. 2 wird die aus gummielastischem oder ähnlichem Werkstoff bestehende Abstreiferzunge (6) in einem Abstreiferhalter (7) gehalten. Er besteht aus einem zur Verminderung der bewegten Massen geeigneten Hohlprofil, das mit einer Traverse (16) ebenfalls von Hohlprofil zusammenwirkt, in dem auf einer Starrachse (8) eine mit einem Spurkranz versehene Büchse oder Führungsrolle (9) gelagert ist. Ein Schlitz (10) in dem Lagerblech (2) folgt mit seiner Mittellinie einem Kreisbogensegment, dessen Radius exzentrisch zur nicht dargestellten Trommelachse verläuft. Der Mittelpunkt der beiden Kreisbogensegmente (10) liegt unterhalb der horizontalen Mittelebene, welche die Trommelachse schneidet und ist hinter der vertikalen Ebene (11), welche die Trommelachse schneidet in der durch den Pfeil angegebenen Laufrichtung versetzt angeordnet. Wie sich aus der Darstellung der Fig. 3 ergibt, ist eine der Führungsbuchsen bzw. Rollenanordnung (8, 9) entsprechende weitere Anordnung (12) als Kulissenstein für die Führungskulisse (10) vorgesehen und mit dem anhand der Fig. 2 beschriebenen Kulissenstein (14) über einen Lenker (15) verbunden. Hierdurch wird eine verklemmungsfreie Führung aller Kulissensteine in den beiden Führungskulissen (10) erreicht.

Tatsächlich ist jedoch der Abstreiferhalter (7) auf der aus einem Hohlprofil bestehenden Traverse (16) über an den Traversenenden angeordnete Konsolbleche (17) und Kontenbleche (18) schwenkbar gelagert. Dazu dient je ein Drehgelenk (19), dessen Buchse in dem betreffenden Konsolblech (17) befestigt ist. Der Lagerzapfen sitzt dagegen in einem Konsolblech (20), das seinerseits an der Rückseite einer Schwinge (21) befestigt ist. Die Befestigung des Abstreiferhalters liegt am freien Ende der Schwingen (21) und ist verstellbar. Die Verstelleinrichtung (22) besteht aus Schlitzen (22), durch die die Verbindungsschrauben (24) geführt sind.

Die Schwingen (21) sind exzentrisch außerhalb der dem beschriebenen Kreissegmentbogen folgenden Führungen bzw. Kulissen (10) in den Drehgelenkten (19) gelagert. Die freien Enden (25) der Schwingen (21) sind zum Anschluß des Gabelkopfes einer Kolenstange (26), welche in dem Arbeitszylinder (27) eines allgemein mit (28) bezeichneten Schub kolbengetriebes einen Kolbenflächenringraum begrenzt, der bei (29) angedeutet ist. Die gegenüberliegende Seite des Schubkolbens begrenzt den Kolbenflächenraum (30) im Arbeitszylinder (27). Der Zylinder ist an einer Konsole (31) schwenkbar gelagert, welcher an der Innenseite des Seitenbleches (2) befestigt ist.

Gemäß dem dargestellten Ausführungsfühungsbeispiel erfolgt die Befestigung der beiden Seitenbleche durch Auswahl von Bohrungen, welche die Seitenbleche durchdringen, wobei ein in den üblichen Gerüsten unten angeordneter Winkelträger (32) mit seinem senkrechten Flansch eine als Widerlager dienende Bohrung für Querglieder aufweist, die vorzugsweise in Form von Schraubenbolzen durch die Bohrungen geführt und mit den Teilen verschraubt sind.

Eine Mehrzahl von Bohrungen befindet sich abstreiferseitig, d. h. am vorderen Ende (33) des Abstreiferbleches. Die Bohrungen sind in von vorn nach unten und hinten geneigten Reihen (34) angeordnet, in denen die Bohrungen jeweils um den Halbmesser ihres lichten Querschnittes nach unten versetzt angeordnet sind. Das gilt auch für die vorderste Bohrung der folgenden Reihen. Durch Auswahl einer Reihe und einer Bohrung ist es daher möglich, den Förderbandkopfabstreifer gegenüber dem stationären Traggerüst der Höhe nach zu verstellen. Schlitze (35, 36) am vorderen Ende (33) bzw. am rückwärtigen Ende (37) des Seitenbleches (2) ermöglichen eine Verstellung des Förderbandkopfabstreifers (1) hin- und entgegen der Laufrichtung des Untergurtes. Außerdem sind in einer senkrechten Reihe (38) am rückwärtigen Ende (37) der Seitenbleche (2) mehrere Bohrungen übereinander angeordnet, was eine Winkelverstellung des Förderbandkopfabstreifers (1) ermöglicht.

Die Zunge (6) des Förderbandkopfabstreifers ist auf einer flachen Profilseite (39) des Abstreiferhalters (7) angebracht. Die benachbarte flache Profilseite (40) trägt eine weitere Abstreiferzunge (41). Durch Drehen des Abstreiferhalters (7) nach Lösen der Befestigungsschrauben (41 a) am Knotenblech (18) läßt sich bei abgenutzter Abstreiferzunge (7) die Abstreiferzunge (41) verwenden.

Im Betrieb des Förderbandes sind die beiden Kolbenflächenräume (30) in den Arbeitszylindern (27) mit einem unter dem Netzdruck liegenden Arbeitsdruck beaufschlagt. Dieser stützt die Reaktionskräfte der Abstreiferzunge über den Abstreiferhalter (7) und die Schwingen (22) sowie die Kolbenstangen (26) und die Schubkolben auf je einem Druckpolster im Kolbenflächenraum (30) ab. Die Schwingen (21) legen sich dabei, wie in der Darstellung der Fig. 1 gezeichnet, der vorderen flachen Seite der Traverse (16) an. Läuft der Untergurt in Richtung des Pfeiles nach Fig. 1 in das stationäre Fördergerüst ab, so wird die Abstreiferzunge (7) von festanbackenden Verunreinigungen und anderen Widerständen auf dem Fördergurt gegen das elastische Druckpolster im Kolbenflächenraum (30) der Arbeitszylinder (27) ausgelenkt, steht aber normalerweise ca. 50 mm von der senkrechten Mittelebene (11) durch die Trommelachse nach vorn ab. An dieser Stelle sind erfahrungsgemäß die die Verunreinigungen ablösenden Zentripetalkräfte am wirksamsten. Da durch werden die Verunreinigungen vom Fördergurt abgestreift.

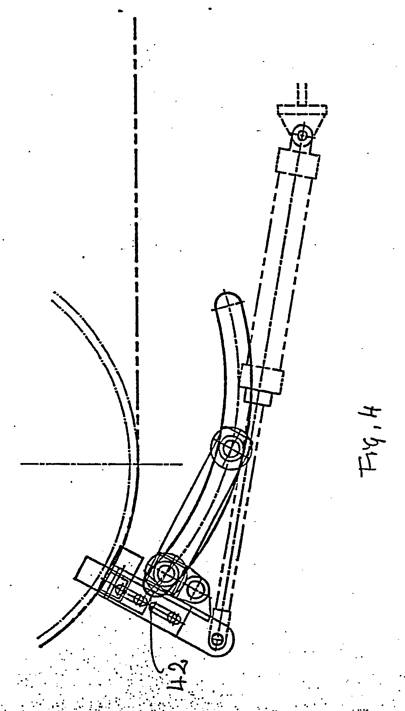

Da die Abstreiferzunge (7) aus einem gegenüber dem Gurt verschleißenden Werkstoff besteht, vermindert sich ihre Stärke während des Betriebes laufend. Daß im Kolbenflächenraum (30) der Schubkolbengetriebe (28) herrschende Druckpolster verstellt jedoch den Abstreiferhalter (7) durch Ausfahren der Kolbenstange (26) in den Kulissen (10), bis deren Endpunkt (42) erreicht ist, was in Fig. 4 dargestellt ist. In dieser Stellung ist die Verschleißtiefe der Abstreiferzunge (7) praktisch aufgebraucht. Das erfordert die beschriebene Umstellung auf die Abstreiferzunge (41).

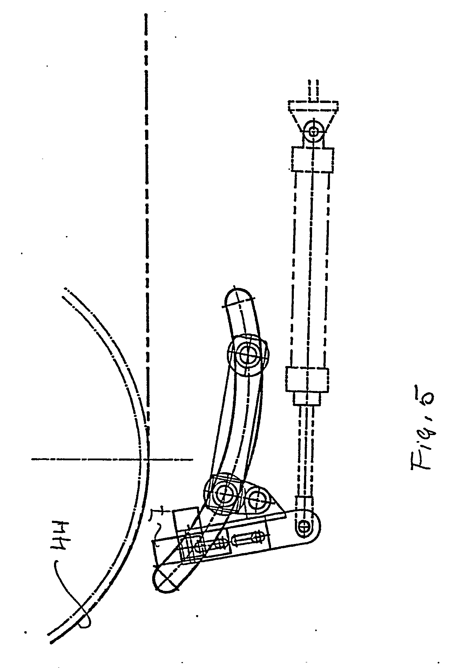

Nicht dargestellt ist eine Meßeinrichtung und der dazu gehörige Stellkreis, welche z. B. auf induktivem Wege mechanische Bandnähte feststellt und nach Maßgabe des Störsignals den Kolbenflächenringraum (29) in den Schubkolbengetrieben (28) mit dem vollen Netzdruck beaufschlagt. Hierdurch werden die Schubkolben in den Arbeitszylindern (27) unter Verkürzung des Kolbenflächenraumes (30) verschoben, was in Fig. 5 wiedergegeben ist. Die Abstreiferzunge (7) hebt dadurch von der Gurtoberfläche (44) ab, so daß die Zungenkante nicht von den durchlaufenden Klammern der Bandnaht beschädigt werden kann. Ebenso kann die Bandnaht nicht vom Abstreifer beschädigt werden. Durch eine 3/2-Wegeventilsteuerung der Druckbeaufschlagung wird nach Maßgabe des Verschwindens des Meßsignals die Druckbeaufschlagung des Kolbenflächenringraumes (29) in den Arbeitszylindern (27) der Schubkolbengetriebe (28) wieder aufgehoben, wodurch die Arbeitsstellung der Abstreiferzunge wieder erreicht wird.

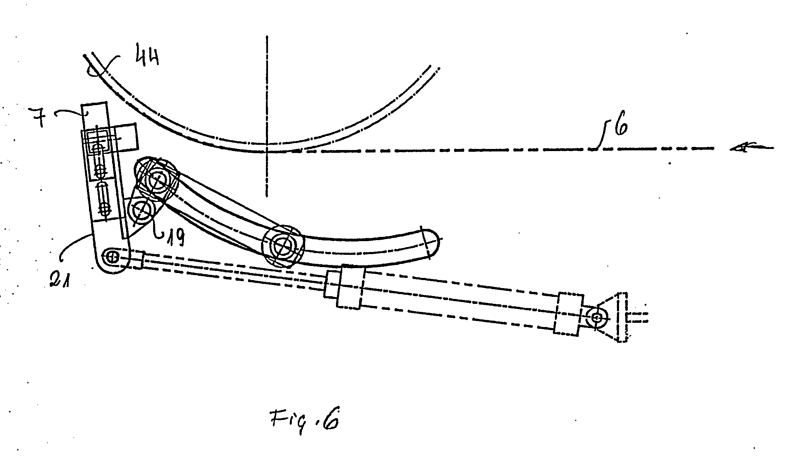

In Fig. 6 ist der Rückwärtslauf des Fördergurtes in seiner Wirkung auf den Förderbandkopfabstreifer dargestellt. Das in Richtung des Pfeiles zurücklaufende Untertrum (6) nimmt die Abstreiferzunge (7) mit. Unter Erhöhung des Druckes im Kolbenflächenraum (30) der Schubkolbengetriebe (28) bewegen sich die Schwingen (21) in den Drehgelenken (19) im Gegenuhrzeigersinn, d. h. in der durch den Pfeil angegebenen Rücklaufrichtung längs eines Kreisbogens, wodurch die Abstreiferzunge (7) von der Gurtoberfläche (44) abgehoben und der Förderbandkopfabstreifer daran gehindert wird, sich mit dem Gurt zu verklemmen.

## Ansprüche

1. Förderbandkopfabstreifer (1), dessen unter der Abwurftrommel (5) des Gurtbandes (4) angeordneter Abstreiferhalter (7) beiderseits mit je einer Schwinge (21) längs eines zur Trommelachse konzentrischen Kreisbogensegmentes beweglich ist und jede Schwinge (21) auf Federn und Schubkolbengetrieben abgestützt ist, die zum Abheben der Abstreiferzunge (7) von der Gurtoberfläche (44) dienen, dadurch gekennzeichnet, daß die Schubkolben bei gesperrter Druckabsenkung im Kolbenflächenraum (30) der Arbeitszylinder (27) der Schubkolbengetriebe (28) als Federn dienen und mit den Kolbenstangen (26) die Schwingen (21) abstützen, welche exzentrisch und außerhalb von den den Kreisbogensegmenten folgenden Führungen (10) entgegen der Förderrichtung des Gurtes (4) gelagert sind.

2. Förderbandkopfabstreifer nach Anspruch 1, dadurch gekennzeichnet, daß die Kolbenflächenräume (30) in den Arbeitszylindern (27) und die Drücke der auf den Kolbenflächen lastenden Druckpolster derart gewählt sind, daß sie die Mitschleppkraft des ablaufenden Fördergurtes (4) auf die Abstreiferzunge (7) ausgleichen und daß die Belastung der Kolbenringflächen dem Netzdruck derart angepaßt sind, daß bei Beaufschlagung der Kolbenflächenringräume (29) in den Arbeitszylindern (27) die Abstreiferzunge (7) abgehoben wird.

3. Förderbandkopfabstreifer nach einem der Ansprüche 1 oder 2, dadurch gekennzeichnet, daß die Führungen (10) in Lagerblechen (2) ausgespart sind, die an stationären Gerüstträgern (3) mit Quergliedern anbringbar sind, für die zum Verstecken abstreiferseitig eine Mehrzahl von in übereinander angeordneten Reihen (34) angeordneten, der Höhe nach um einen halben Durchmesser versetzten Quergliedaussparungen und endseitig angebrachte Quergliedaussparungen (36, 38) vorgesehen sind.

4. Förderbandkopfabstreifer nach einem oder mehreren der Ansprüche 1 bis 3, dadurch gekennzeichnet, daß als Führungen aus den Lagerblechen ausgesparte Kulissen für an den Enden der Traverse (16) angeordnete Kulissensteine (12, 14) dienen und zur exzentrischen Lagerung der Schwingen (21) an der Traverse (16) Konsolen (17) mit je einer Buchse für das Drehgelenk (19) der Schwingen (21) vorgesehen sind.

5. Förderbandkopfabstreifer nach einem der Ansprüche 1 bis 4, dadurch gekennzeichnet, daß die Zylinder (27) der Schubkolbengetriebe (28) auf Konsolen (31) der Seitenbleche (2) gelagert sind.

6. Förderbandkopfabstreifer nach einem oder mehreren der Ansprüche 1 bis 5, dadurch gekennzeichnet, daß die Schwingen (21) in der Endstellung der Kolben in den Arbeitszylindern (27) auf der Traverse (16) abgestützt sind.

7. Förderbandkopfabstreifer nach einem oder mehreren der Ansprüche 1 bis 6, dadurch gekennzeichnet, daß der Abstreiferhalter (7) in Längsrichtung der Schwingen (21) ver- und einstellbar ist.

8. Förderbandkopfabstreifer nach einem oder mehreren der Ansprüche 1 bis 7, dadurch gekennzeichnet, daß jeder Kulisse (10) eines Seitenbleches (2) mehrere durch Lenker (15) miteinander verbundene Kulissensteine (12, 14) zugeordnet sind.

Fig.1

EP 0 377 071 A1

Fig. 2

Fig. 3

EP 0 377 071 A1

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1 216 194  (TRANSPORTTECHNIK)<br>* Patentanspruch; Fig. *<br>--- | 1 | B 65 G  45/16 |
| A | US-A-4 768 645  (S.D. FARRIS)<br>* Ansprüche 1,4,5; Fig. *<br>----- | 1 | |

RECHERCHIERTE
SACHGEBIETE (Int. Cl.5)

B 65 G

Der vorliegende Recherchenbericht wurde für alle Patentansprüche erstellt

| Recherchenort | Abschlußdatum der Recherche | Prüfer |
|---|---|---|
| DEN HAAG | 26-03-1990 | VAN ROLLEGHEM F.M. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument